# EUROPEAN PATENT APPLICATION

(11) **EP 1 982 801 A1**
(43) Date of publication of application: **22.10.2008**
(21) Application number: 08153936.3
(22) Date of filing: 02.04.2008
(51) Int. Cl.: B25J 17/02

(54) **Parallel-link operational device**

(30) Priority: 17.04.2007 JP 2007108727
(71) Applicant: FANUC LTD, Minamitsuru-gun, Yamanashi 401-0597 (JP)
(72) Inventor: Nihei, Ryo, Minamitsuru-gun Yamanashi 401-0597 (JP); Odaka, Shunichi, Minamitsuru-gun Yamanashi 401-0597 (JP); Kariya, Isao, Minamitsuru-gun Yamanashi 401-0597 (JP)
(74) Representative: Ward, James Norman

(57) **Abstract**

A parallel-link operational device in which links of a link mechanism connecting rotary actuators (6) and a movable member (5) do not protrude outside an area of a base (4). Six flat rotary actuators (6) driven to control position and posture of the movable member (5) are provided on the base (4), rotary output shafts (12) of which are disposed radially pointing toward the center of the base (4). The links (11) fixedly mounted on the rotary output shafts (12) of the actuators (6) are connected by joints (13) to one end of rods (10), and the other end of the rods (10) are connected to the movable member (5) by joints (14). An end effector (20) mounted on the movable member (5) is rotated by an actuator (7) for posture control mounted on the base (4) via a rotational-force transmission mechanism (15) composed of joints, spline couplings, etc. The links (11) rotate in planes parallel to the sides of the base (4) without protruding beyond the area covered by the base (4).

## Description

### BACKGROUND OF THE INVENTION

### 1. Field of the Invention

The present invention relates to a parallel-link operational device.

### 2. Description of Related Art

So-called parallel-link operational devices in which a plurality of actuators are mounted on a fixed member as a base so that links connected to output shafts of the respective actuators are driven in parallel to control a position and a posture of a movable members mounted on ends of the links, have been developed in a variety of forms.

As a parallel-link operational device that uses a rotary actuator that outputs rotational force as a drive power source, for example, a parallel-link operational device is known that provides three motors on the fixed member so that output shafts of the motors move along sides of an equilateral triangle formed by the fixed member and the output shafts of the motors and the movable members are connected in a parallel linkage structure, such that by controlling the driving of the three motors the posture (the horizontal orientation) of the movable member is held and its position is controlled (JP-S63-501860-A).

In addition, an invention that relates to a parallel robot having six degrees of freedom is also known, in which two motors are disposed opposite each other, links are provided on every other side of a hexagonal pedestal and connected to the output shafts of the motors so that the output shafts of the motors are parallel to the sides of a hexagonal pedestal, an arm is connected to the ends of the links, a single bracket (movable member) is connected to the end of the arm, and the position and posture of the bracket (the movable member) is controlled by controlling the rotation position of the motors (JP06-270077A).

In the conventional parallel-link operational device using rotary actuators, the actuators are provided approximately parallel to the sides of the actuator base. The links are provided so as to swing in a direction approximately perpendicular to the sides of the fixed member base. Consequently, the swinging of power transmission units for driving the movable member, each of which is composed of link-joint-rod-joint, is performed in a plane that is at a right angle to the base side.

However, in order to widen the range of motion of the movable member, it is necessary to expand an extent of a spatial displacement of the power transmission units that accompanies the swinging of the actuator, and in order to do so the links and the rods of the power transmission units are usually lengthened as necessary.

When that is done, because the swing plane of the power transmission unit is at a right angle to the fixed member base side, when the power transmission unit swings, the link and the rod of the power transmission unit protrude outside an area covered by the base. Moreover, an extent of this protrusion is not constant but changes.

In a small parallel-link operating device of small output contemplated for use in performing tasks together with people, this sort of action presents a very grave difficulty due to the danger of contact or entanglement.

When positioning the movable member at a given position in a parallel-link operating device that uses rotary actuators, one or two angles of rotation of the link of the power transmission unit can be selected, and it is conceivable that, by selecting an angle of rotation of a lesser extent of protrusion of the power transmission unit link and rod outside the base, the extent of protrusion can be controlled. However, for the following reason this strategy cannot be adopted.

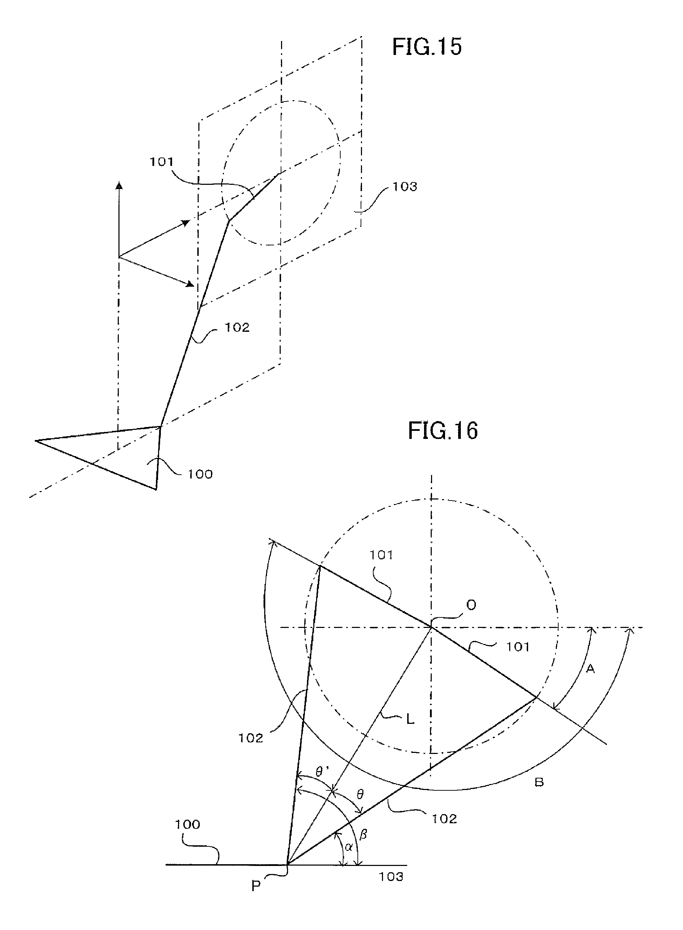

FIG. 15 is a schematic diagram of the disposition of the movable member and the actuators of the conventional parallel-link operating device that uses rotary actuators. In FIG. 15, the movable member 100 and the base, not shown, are parallel, and further, the centerline of the movable member 100 and the centerline of the base are shown as coinciding. In addition, only one of the links 101 and rods 102 of the power transmission unit that transmits power from the actuator, not shown, and are connected to the movable member are shown. The other end of the link 101 mounted on the output shaft of the actuator, not shown, is connected to the rod 102 by a joint, and the other end of the rod 102 is connected to the movable member 100 by a joint. It is to be noted that, in the state shown in FIG. 15, regardless of the distance between the plane of the movable member 100 and the plane of the base all the rods connected to the movable member 100 form the same angle with respect to the movable member 100. Moreover, FIG. 16 is a diagram illustrating the disposition of the actuator and the movable member shown in FIG. 15, as seen from a direction perpendicular to a plane of rotation 103 of the link 101. The plane of rotation 103 is parallel to the direction of radiation outward from the center of the base.

In a case in which, when the movable member 100 is positioned at a particular position, a given actuator and the power transmission unit attached to that actuator, as shown in FIG. 16, the rod 102 is in a phase of an angle θ with respect to a hypothetical line L connecting a center of rotation O of the link 101 and the center P of the joint between the movable member 100 and the rod 102, then in a case in which the phase symmetrical about the hypothetical line L is θ', it is possible that the movable member 100 can be positioned at the same position even when the rod 102 is in the phase θ' with respect to the hypothetical line L.

However, a state of the power transmission unit in the phase θ' with respect to the hypothetical line L cannot be adopted due to problems with load bearing capacity, for the reason described below.

The movable member 100 of the rotary-type parallel-link operational device is spatially supported by a plurality of power transmission units (links 101, rods 102, and the like), and a force acting on the movable member 100 is borne by the power transmission unit. With respect to the exerted external force, if the load bearing capacity of the power transmission unit is large, the movable member 100 is supported rigidly; if the load bearing capacity of the power transmission unit is small, the movable member 100 is supported flexibly. The load bearing capacity of the power transmission unit changes depending on an angle of tilt of the power transmission unit with respect to the plane of the movable member 100, that is, the angle formed by a line joining the two ends of the rod 102 and the plane of the movable member 100 (in FIG. 16, angle α or β). The closer the angle of tilt to the horizontal, the greater the load bearing capacity with respect to the horizontal component of the external force and the lower the load bearing capacity with respect to the vertical component of the external force. Conversely, the closer the angle of tilt to the vertical, the higher the load bearing capacity with respect to the vertical component of the external force and the lower the load bearing capacity with respect to the horizontal component of the external force.

The angles of tilt of the power transmission units change depending on the position and posture of the movable member 100. If the angles of tilt of the power transmission units are each different, then it is possible that if one power transmission unit load bearing capacity diminishes the load may be borne by the remaining power transmission units. However, in a case in which all the power transmission units are tilted at the same angle as described above, the load capacities of all the power transmission units change in the same way and thus the total load bearing capacity changes. In particular, as the angles of tilt of the power transmission units approach a right angle, that is, as the power transmission units approach being parallel, the load bearing capacity with respect to the external force acting horizontally on the movable member 100 decreases. This situation must be avoided in a parallel-link operational device, of which high-speed horizontal motion is often required. Accordingly, with respect to checking the spatial posture of the power transmission unit, it is necessary to carry out such a check in a state in which the angles of the power transmission units are the same and to make certain that the angle of tilt does not become a right angle depending on the position of the movable member 100.

When the movable member 100 is at the position shown in FIG. 16, the angle of rotation of the link 101 will be either A or B shown in FIG. 16, depending on which the angle thereof with respect to the movable member 100 of the rod 102 will be either α or β. However, because the location of the center of rotation is usually further outside than the movable member 100 rod connection points (in a direction away from the center of the base), the rod angle β when the rod 102 comes inside from the base center is always greater than the rod angle α when the rod 102 comes inside from the base center. In some cases, β approaches a right angle, and thus is at a disadvantage with respect to an external force in the horizontal direction. Therefore, only arm angle A can be selected. As a result, the joint portion connecting the rod 102 and the link 101 protrudes outside the base.

In arrangements in which motors or other such rotary actuators are disposed so that their rotary output shafts are along the sides of an equilateral triangle base or the like, as described above, the links 101 mounted on the rotary output shafts of the power transmission unit actuators rotate on planes of rotation 103 that are perpendicular to the sides of the base as center of rotation axes, and therefore the connecting points between the links 101 and the rods 102 move beyond the base, posing a risk of entangling bodies or clothing in the links 101 and the rods 102 and thus presenting a safety problem. In order to solve this problem it is possible to provide a member that covers the base up to the positions of maximum protrusion of the connecting points between the links 101 and the rods 102. However, such a solution is undesirable insofar as it defeats the purpose of a compact parallel-link operational device.

### SUMMARY OF THE INVENTION

The present invention solves a problem of links of a linkage mechanism protruding beyond a base in a parallel-link operational device.

A parallel-link operational device of the present invention comprises: a base; a movable member on which an end effector is attached; a plurality of rotary actuators fixedly mounted at respective predetermined positions on the base such that axes of output shafts of the rotary actuators extend substantially radially from a center of the base; and a link mechanism for operatively connecting the respective output shafts of the rotary actuators to the movable member so that a position and/or a posture of the movable member is controlled by the rotary actuators.

The parallel-link operational device may further comprise an additional actuator mounted on the base for controlling a posture of the end effector, a rotary shaft provided at the movable member and connected with the end effector, and a rotational-force transmission mechanism for transmitting a rotational force of the additional actuator to the rotary shaft. In this case, six of the rotary actuators may be provided so that the position and the posture of the movable member are controlled, and the posture of the end effector with respect to the movable member is controlled by the additional actuator. Alternatively, three of the rotary actuators may be provided and the link mechanism may comprise parallel linkages so that the position of the movable member is controlled by the three rotary actuators, and the posture of the end effector with respect to the movable member is controlled by the additional actuator.

The plurality of rotary actuators may comprise a first three actuators that actuate a first movable member on which a first end effector is mounted, and a second three actuators that actuate a second movable member on which a second end effector is mounted to be opposite the first end effector. The link mechanism may comprise parallel linkages for operatively connecting the first movable member and the first three rotary actuators, and linkages for operatively connecting the second movable member and the second three rotary actuators for controlling the posture of the second movable member. In this case, the parallel-link operational device may further comprise a support post provided on a pedestal and rotatably supporting the second movable member by a spherical joint, a rotary shaft provided at the first movable member and connected with the first end effector, an additional actuator mounted on the base for controlling a posture of the first end effector, and a rotational-force transmission mechanism for transmitting a rotational force of the additional actuator to the rotary shaft.

The rotary actuators may be arranged so that the axes of the output shafts radially extend at equal intervals about the center of the base.

The rotary actuators may be arranged so that distal ends of the output shaft are directed toward the center of the base.

The rotary actuators may be arranged so that distal ends of the output shafts are directed away from the center of the base, and have covers for preventing links of the link mechanism fixed to the output shafts from being exposed outside.

The rotary actuators may be arranged so that the axes of the output shafts are inclined with respect to the base.

The rotary actuators may be mounted on mounting members arranged vertically downward from the base.

The rotary actuators may be mounted on mounting members arranged vertically upward from the base.

Covers may be provided to connect the mounting members with one another.

The rotary actuators may have speed reducers.

Swinging motions of links of the link mechanism are made parallel to sides of the base, and the area through which the links swing is made to be within an area covered by the base. As a result, the link mechanism can be prevented from contacting or entangling operators or nearby objects. In addition, since flat-shaped actuators are used, an increase in the size of the parallel-link operational device can be prevented.

### BRIEF DESCRIPTION OF THE DRAWINGS

FIG. 1 is a diagram showing essential portions of a parallel-link operational device of a first embodiment of the present invention;
FIG. 2 is a diagram showing a perspective view from above of the parallel-link operational device of the first embodiment of the present invention;
FIG. 3 is a diagram showing an end effector drive system of the first embodiment;
FIG. 4 is a diagram showing essential portions of a parallel-link operational device of a second embodiment of the present invention;
FIG. 5 is a diagram showing a perspective view from above in the second embodiment with base, pillar, and pedestal removed;
FIG. 6 is a diagram showing essential portions of a third embodiment of the present invention;
FIG. 7 is a diagram showing a view looking up from a movable member side in the third embodiment shown in FIG. 6;
FIG. 8 is a diagram showing essential portions of a parallel-link operational device of a fourth embodiment of the present invention;
FIG. 9 is a diagram showing essential portions of a fifth embodiment of the present invention;
FIG. 10 is a diagram showing essential portions of a sixth embodiment of the present invention;
FIG. 11 is a diagram illustrating a coupling between a position control actuator and a movable member in the sixth embodiment;
FIG. 12 is a diagram showing essential portions of a seventh embodiment of the present invention;
FIG. 13 is a diagram illustrating a position control plate drive system in the seventh embodiment;
FIG. 14 is a diagram illustrating a posture control plate drive system in the seventh embodiment;
FIG. 15 is a schematic diagram showing disposition of movable member and actuator of the conventional parallel-link operating device that uses rotary actuators; and
FIG. 16 is a diagram illustrating a view from a direction perpendicular to a plane of rotation of links of the conventional parallel-link operational device shown in FIG. 15.

### DETAILED DESCRIPTION

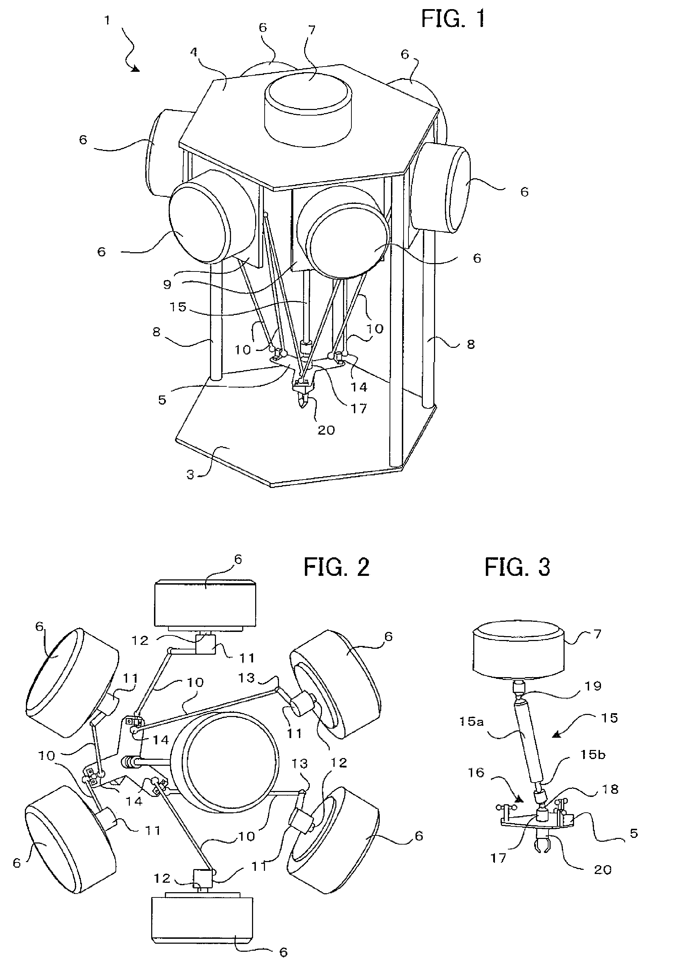

FIG. 1 is a diagram showing essential portions of a parallel-link operational device of a first embodiment of the present invention. FIG. 2 is a diagram showing a perspective view from above of the parallel-link operational device of the first embodiment of the present invention. FIG. 3 is a diagram showing an end effector drive system of the first embodiment.

This first embodiment is a parallel-link operational device with six degrees of freedom, in which a movable member 5 can be a set to any position and posture using six rotary actuators 6, and moreover, an rotary axis 17 fixedly mounted on the movable member 5 can be continuously rotated using a single end effector posture control actuator 7 fixedly mounted on a base 4.

The base 4 of the parallel-link operational device 1 is supported by a plurality of pillars 8 fixedly mounted on a pedestal 3. In the present embodiment, the face 4 is formed in the shape of a hexagon, and has actuator mounting members 9 suspended from each side thereof. On each actuator mounting member 9 is mounted a position/posture control rotary actuator 6 for controlling the position and posture of the movable member 5. Further, on the base 4 is mounted a single end effector posture control actuator 7 (this actuator also is configured as a rotary type like the position/posture control rotary actuators 6).

The actuators 6 are rotary actuators for controlling the position and posture of the movable member 5. Links 11 are fixedly mounted on rotary output shafts of the rotary actuators 6 so as to be able to rotate as a single unit together with the rotary output shafts 12.

The rotary actuators 6 for controlling the position and posture of the movable member 5 are disposed to so that their rotary output shafts 12 are perpendicular to the sides of the hexagonal base 4 radially at equal intervals about the center of the base 4, and moreover, pointing toward the center the base 4. The rotary actuators 6 and the movable member 5 are connected by power transmission units. The power transmission units are each composed of the link 11 that is fixedly mounted on the rotary output shaft 12, a rod 10 one end of which is connected to the link 11 through a joint 13, and a joint 14 that connects the other end of the rod 10 to the movable member 5.

As shown in FIG. 3, a rotational-force transmission means 15 is connected through a joint 19 to the rotary output shaft of the end effector posture control rotary actuator 7 mounted at the center of the base 4, to the other end of which rotational-force transmission means 15 is connected a rotation mechanism 16 through a joint 18, with an end effector 20 mounted on an rotary axis 17 of the rotation mechanism 16 so as to protrude toward an opposite side of the movable member 5. In the present embodiment, the rotational-force transmission means 15 is configured as an extendible and contractible shaft, itself configured as a spline coupling composed of a shaft 15a having spline holes and a shaft 15b having spline teeth that engage the spline holes.

In addition, the joints 13, 14 provided at both ends of the rod 10 are configured such that, if one joint has two degrees of freedom, the other joint has three degrees of freedom, for a total of five degrees of freedom. Further, the joints 18, 19 mounted at both ends of the rotational-force transmission means 15 are configured as joints of two degrees of freedom.

By driving the position/posture rotary actuators 6, the position in three-dimensional space (position along orthogonal X, Y, and Z axes) of the movable member 5 and the posture of the movable member 5 are controlled via the links 11, the joints 13, the rods 10, and the joints 14. In addition, by driving the end effector invitation control actuator 7 and controlling the rotation position of the rotary axis 17 of the rotation mechanism 16 through the joint 19, the rotational-force transmission means 15, and the joint 18, and controlling the rotation position of the end effector 20, various operations are carried out. Even when the position and posture of the movable member 5 change, the rotational-force transmission means 15 that connects the rotary output shaft of the end effector posture control actuator 7 provided on the base 4 with the rotation mechanism 16 on the movable member 5 extends and contracts, and moreover, the rotational-force transmission means 15 and the movable member 5 linkage, and the rotational-force transmission means 15 and the actuator 7 rotary axis linkage, are both effected by joints , 18, 19 of two degrees of freedom, and therefore, even when the position and posture of the movable member 5 changes, the rotation position of the end effector 20 can be controlled with the actuator 7. Moreover, this actuator 7 is provided on the base and not on the movable member 5, and therefore the movable member 5 can be made lightweight.

As described above, the position/posture control rotary actuators 6 are fixedly mounted on the base 4 so that the rotary output shafts 12 are directed radially toward the center of the base 4, and the links 11 fixed to the rotary output shafts 12 rotate in planes that are perpendicular to the axes of the rotary output shafts 12. In other words, in the first embodiment, the position/posture control rotary actuators 6 are mounted on the actuator mounting members 9 depending vertically downward from the sides of the octagonal base 4 and are each disposed perpendicularly to the center of the octagon so that the rotary output shafts 12 of the position/posture control rotary actuators 6 point toward the center of the base 4, with the links fixedly mounted on the rotary output shafts 12 and rotating in planes parallel to the respective sides of the octagon.

As a result, in a case in which there is a possibility that the joints 13 that are the connecting points between the links 11 and the rods 12 may protrude outside the base 4, it is a sufficient that lengths of the sides of the octagonal base 4 are set so that, when the links 11 become horizontal (that is, parallel to the sides of the octagonal base 4 mounting the rotary type actuators 6 that drive the links 11), the connecting points between the links 11 and rods 12 do not protrude beyond the base 4 in this state. In this case, if the rotary output shafts 12 of the position/posture control rotary actuators 6 are positioned at intermediate points in the sides of the octagonal base 4, the lengths of the sides of the octagonal base 4 may be twice the lengths of the links 11, so that the base 4 itself and does not become especially large. Compared to the conventional parallel-link operational device that swings in a direction perpendicular to the sides of the base, it can be seen that the conventional device, because the plane of rotation of the links is perpendicular to the plane of the sides of the base, the connecting points between the links and the rods always protrudes outside the base area. However, in the present embodiment, as described above, the links 11 to not protrude from the area covered by base 4, and therefore there is no risk of people or clothing being entangled by the motion of the links 11 and the rods 10, enabling safety to be improved.

Although there are no particular specifications as to type of movable member position/posture control rotary actuator 6, in the present embodiment, a flat actuator having a large diameter and a short total length is used. In other words, the actuator is configured as a flat actuator whose length in a direction perpendicular to an axial direction is greater than its length in a direction of the rotary output shaft. In the event that this actuator is configured as a motor, for example, an electromagnetic actuator or a rotary type of electrostatic actuator and composed of multiple layers of rotors and stators having multiple electrodes as described in JP-2005-278331-A may be used. It is to be noted that the end effector posture control actuator 7 may also be configured as a flat actuator like the movable member position/posture control rotary actuator 6, and in this embodiment an example using the same actuator is shown. In addition, actuators having decelerators inside may be used for these rotary actuators 6, 7.

It is to be noted that, in the first embodiment described above, although an example is shown in which the movable member 5 is below the base 4, so long as there is no adverse effect on safety, there is no problem with rotating or inverting the relative positions of the movable member 5 and the base 4.

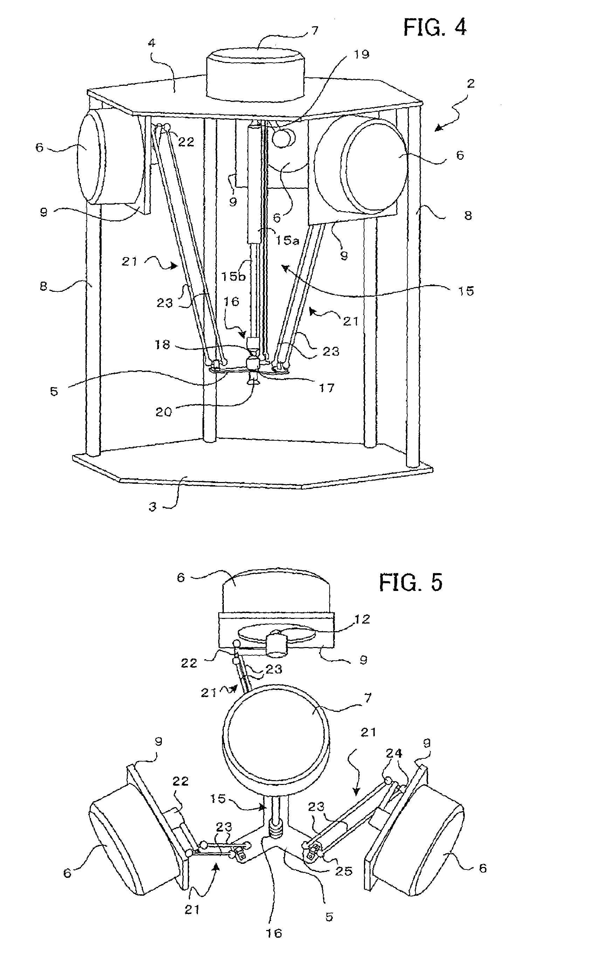

FIG. 4 is a diagram showing essential portions of a parallel-link operational device of a second embodiment of the present invention. FIG. 5 is a diagram showing a perspective view from above in the second embodiment with base, pillar, and pedestal removed. It is to be noted that, in FIG. 4 and FIG. 5, the same reference characters are given to elements that are the same as those in the first embodiment.

The second embodiment is a parallel-link operational device having four degrees of freedom that can move in three directions (that is, positions on orthogonal X, Y, and Z axes in three-dimensional space) while holding the posture of the movable member 5 constant with respect to the base 4 using three position control rotary actuators 6, and can control the rotation and rotational position of the end effector mounted on the rotary axis 17 by rotating the rotary axis 17 of the rotation mechanism 16 fixedly mounted on the movable member 5 using a single end effector posture control actuator 7 fixedly mounted on the base 4.

Except for the actuator 7 for rotating the rotary axis 17 on the movable member 5, the rotary actuators 6 for controlling the position of the movable member 5 are disposed at equal intervals radially about the center of the base so as to have their rotary output shafts perpendicular to three sides (that is, every other side) of the octagonal base 4.

The movable member 5 is connected to each of the rotary output shafts 12 of the three rotary actuators 6 for position control via power transmission units each configured as a parallel linkage 21. In other words, links 22 are fixedly mounted on the rotary output shafts 12 of the rotary actuators 6, so as to be able to rotate as a single unit together with the road output shafts 12. In addition, two rods 23 are connected to the links 22 via joints 24, with the other end of the two rods 23 connected to the movable member 5 via joints 25. The construction link 22 connecting part → rods 23 → movable member 5 connecting part → rod 23 is designed and disposed so as to correspond to the sides of a parallelogram, by which the parallel linkage 21 is formed. Three parallel linkages 21 are connected to the movable member 5, and therefore its posture is fixed. In the present embodiment, the connecting parts between the links 22 and the rods 23, and the connecting parts between the movable member 5 and the rods 23, are parallel to the base 4, and therefore the movable member 5 can always be maintained in a posture that is parallel to the base 4.

The means for driving the end effector mounted on the rotary axis 17 of the rotation mechanism 16 provided on the movable member 5 is the same as that in the first embodiment, with the actuator 7 fixedly mounted on the base 4 drivingly controlling the end effector 20 via the joint 19, the rotational-force transmission means 15, the joint 18, and the rotary axis 17 of the rotation mechanism 16.

The joints 18, 19 at both ends of the rotational-force transmission means 15 are joints of two degrees of freedom such as universal joints, with the rotational-force transmission means 15 able to transmit rotation even as the movable member 5 moves by transmitting the rotation of a spline coupling or the like and using the extendable and contractible element.

In addition, in this second embodiment as well, although an example is shown in which the movable member 5 is below the base 4, so long as there is no problem with safety, this arrangement may be rotated or inverted with no problem.

Moreover, in this second embodiment as well, as with the first embodiment, flat rotary actuators 6, 7 are used, and further, the rotary actuators 6 used for position control of the movable member 5 are disposed radially and at equal intervals about the base 4 with their rotary output shafts 12 pointing toward the center of the base 4. With such an arrangement, the links 22 of the parallel linkages 21 mounted on the rotary output shafts 12 rotate in planes that are perpendicular to axes of the rotary output shafts 12, and therefore the connecting points between the links 22 and the rods 23 do not protrude from the base, enabling entanglement of persons, clothing, or the like during operation of the parallel-link operational device to be avoided to the maximum extent possible and enabling safety to be improved.

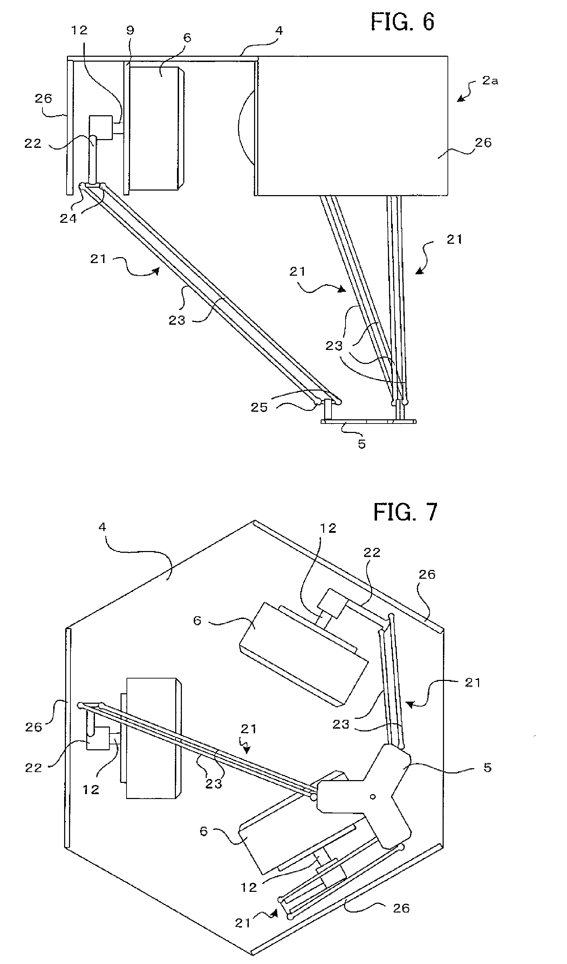

FIG. 6 and FIG. 7 are diagrams illustrating essential portions of a third embodiment of the present invention. The differences between the third embodiment and the second embodiment are that the rotary actuators 6 for controlling the position of the movable member 5 are mounted on the base 4 in the reverse direction of the direction in which they are mounted in the second embodiment, and covers 26 are provided. The remainder of the configuration is the same as that of the second embodiment. FIG. 6 is a diagram showing a side view of a parallel-link operational device 2a, and FIG. 7 is a diagram showing a view looking up from the movable member side in the third embodiment shown in FIG. 6.

In this third embodiment, the three rotary actuators 6 that control the position of the movable member 5 are mounted on actuator mounting members 9 that depend vertically downward from and along every other side of the hexagonal base 4 in such a way that their rotary output shafts point outward from the center of the base 4. In addition, covers 26 that depend vertically downward from the base 4 so as to cover an area of movement of the links of the parallel linkages 21 are mounted on the sides of the hexagonal base on which the rotary actuators 6 are mounted. With such an arrangement, the connecting points and between the links 22 of the parallel linkages 21, and the links 22 and the rods 23, are covered by the covers 26 and their exposed portions reduced, thus preventing entanglement of persons or clothing in the movement of the parallel linkages 21 and enhancing safety.

It is to be noted that the remainder of the configuration and the operation of the parallel-link operational device are the same as those of the second embodiment.

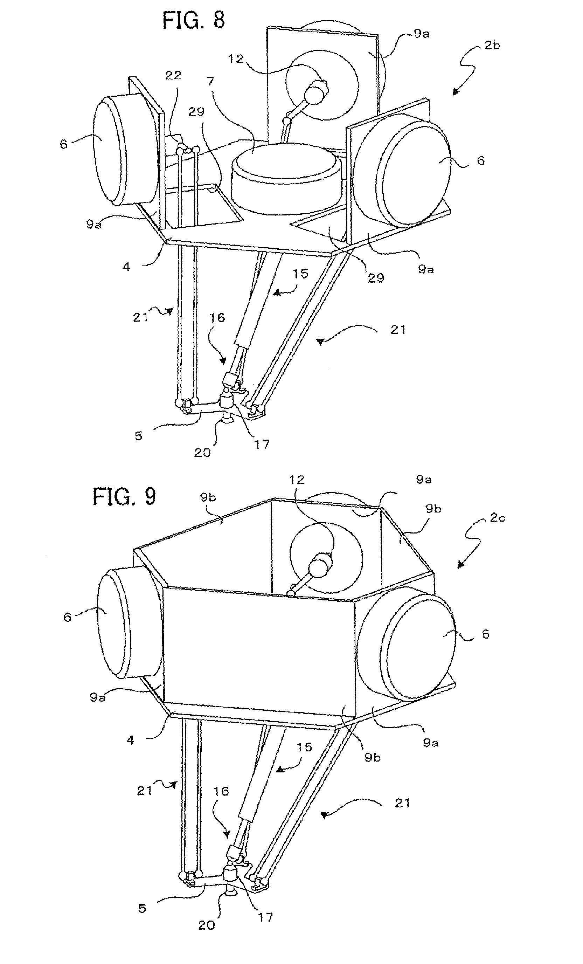

FIG. 8 is a diagram showing essential portions of a parallel-link operational device 2b of a fourth embodiment of the present invention that is a variation of the second embodiment shown in FIG. 4 and FIG. 5. The differences between this fourth embodiment and the second embodiment are that actuator mounting members 9a that mount the position control rotary actuators 6 are mounted on top of the base 4 so as to protrude upward therefrom, and openings 29 for enabling the rods 23 of the parallel linkages 21 to pass therethrough are provided in the base 4; the rest of the configuration is the same as that of the second embodiment. With such an arrangement, the work space and the parallel linkage space can be separated. In addition, operation as a parallel-link operational device is the same as that of the second embodiment. In this fourth embodiment as well, the links 22 mounted on the rotary output shafts of the rotary type actuators 6 of the parallel linkages 21 cannot protrude beyond the base 4, thereby enabling safety to be improved in the same way as with the second embodiment.

FIG. 9 is a diagram showing essential portions of a fifth embodiment of the present invention, which varies the fourth embodiment described above. This fifth embodiment adds to the fourth embodiment covers 9b, but is otherwise the same as the fourth embodiment. In this fifth embodiment, by providing the covers 9b composed of planar material so as to couple together the actuator mounting members 9a provided on and projecting from the base 4, the sides of the hexagonal base 4 are enclosed by the actuator mounting members 9a and the covers 9b, so that the area through which the links 22 of the parallel linkages 21 swing are not exposed, thus securing safety. Further, safety may be further enhanced by providing a lid that covers the top of the area enclosed by the actuator mounting members 9a and covers 9b (the area through which the links 22 swing) to make the area an enclosed space. It is to be noted that that the remainder of the configuration and the operation of the parallel-link operational device are the same as the fourth embodiment.

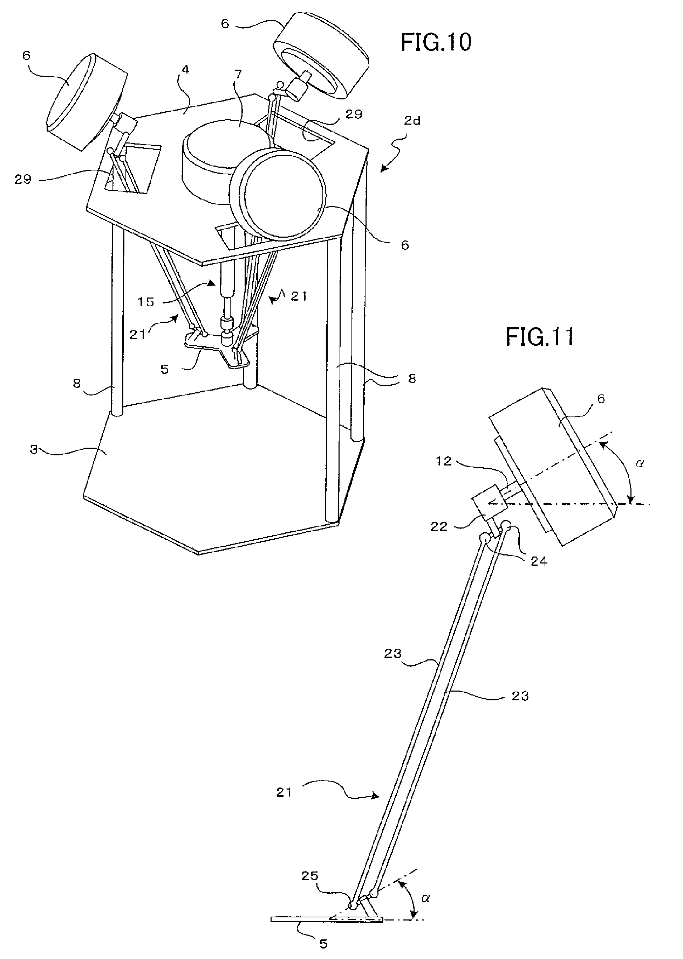

FIG. 10 is a diagram showing essential portions of a sixth embodiment of the present invention. FIG. 11 is a diagram illustrating a coupling between one position control rotary actuator 6 and the movable member 5 in the sixth embodiment.

A parallel-link operational device 2d of the sixth embodiment is a variation of the fourth embodiment shown in FIG. 8, in which the three actuator mounting members 9a projecting from the base 4 in the fourth embodiment are tilted at a predetermined angle and the position control rotary actuators 6 that are mounted on the actuator mounting members 9a are also fixedly mounted at a predetermined angle. It is to be noted that the actuator mounting members 9a are not shown in FIG. 10.

As shown in FIG. 11, the position control rotary actuator 6 is tilted at a predetermined angle α with respect to the horizontal plane (the plane of the base 4 or the plane of the pedestal 3), and thus the two rods 23 that form the parallel linkage 21 are tilted at the predetermined angle α and coupled to the link 22 and to the movable member 5 by joints 24, 25, respectively.

The above-described points are where the sixth embodiment differs from the fourth embodiment; otherwise, the sixth embodiment is the same as the fourth embodiment. Provided that connection locations of the rods 23 can be angled in the foregoing manner so as to support the parallel linkages, then, so long as no interference arises between the parallel linkages, and so long as safety is not adversely affected, there are no particular restrictions on the directions in which the position control rotary actuators 6 may be tilted.

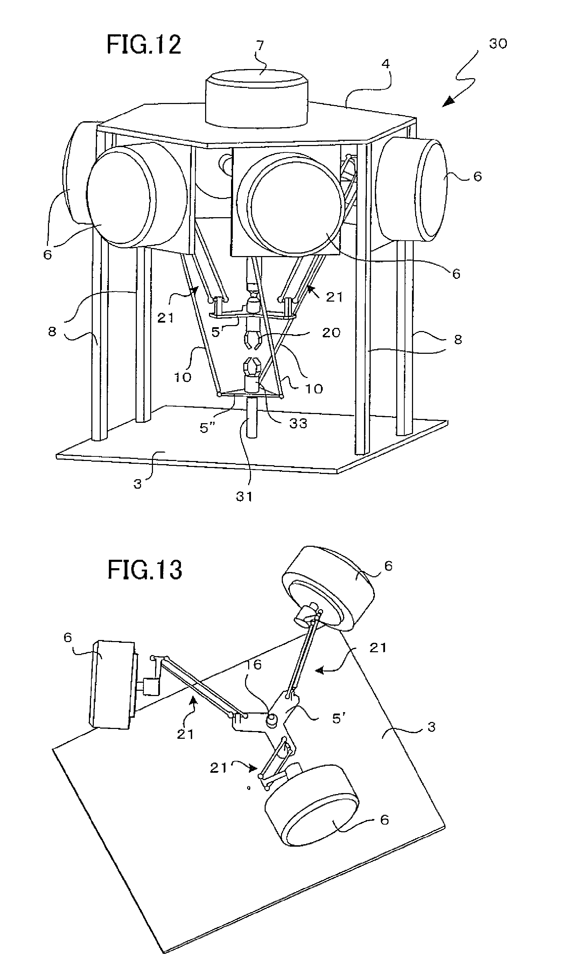

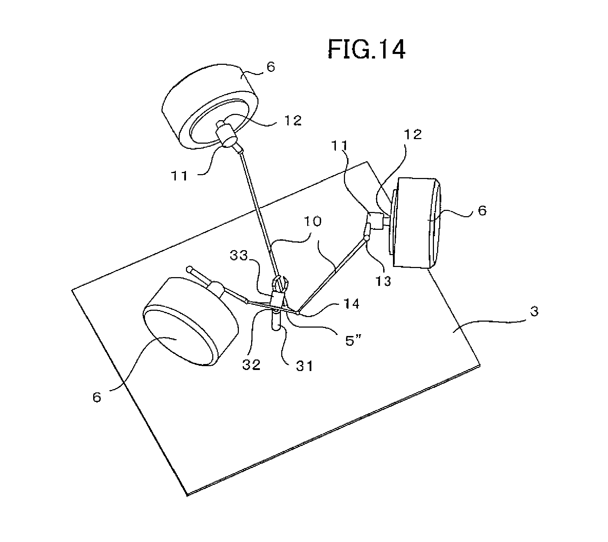

FIG. 12 is a diagram showing essential portions of a seventh embodiment of the present invention. FIG. 13 is a diagram showing only a first movable member 5' whose position is controlled, the three rotary actuators 6 that control it, the parallel linkages 21 that control the position of the first movable member 5', and the pedestal 3 in the seventh embodiment. Further, FIG. 14 is a diagram showing only a second movable member 5" whose posture is controlled, the three-year rotary actuators 6 that control it, posture control rods that control the posture of a support post 31 and the second movable member 5", and the pedestal 3.

A parallel-link operational device of the seventh embodiment is a parallel-link operational device of six degrees of freedom having two movable members, the first movable member 5' whose position is controlled and the second movable member 5" whose posture is controlled. The first movable member 5' is kept in a fixed posture by the three parallel linkages 21, with only its position controlled by the three rotary actuators 6. In other words, the mechanism that controls the position of the first movable member 5' has the same configuration as that of the second embodiment shown in FIG. 4 and FIG. 5, with the movable member 5 in the second embodiment being the first movable member 5' of the seventh embodiment.

Since the mechanism that drives the first movable member 5' is the same as that in the second embodiment described above, a detailed description thereof is omitted.

By contrast, the second movable member 5" is connected to the support post 31 provided on the pedestal 3 through a spherical joint 32, and its position is fixed. The links 11 are fixedly mounted on the rotary output shafts 12 of the three rotary actuators 6, the links 11 and one end of the rods 10 are connected to each other via joints 13, not shown, and the other end of the rods 10 are connected to the second movable member 5" via joints 14, so that the power of the three rotary actuators 6 it is transmitted by the posture control rods 10, rotation is carried out around the three axes, and the posture of the second movable member 5" can be changed. In other words, the mechanism that drives the second movable member 5" differs from that of the first embodiment described with reference to FIGS. 1-3 in that three of the actuators are eliminated and the remaining to three rotary actuators 6 drive the second movable member 5", and the second movable member 5" is mounted on the supporting post 31 via the spherical joint 32 in such a way that its posture can be changed. The remainder of the configuration of the seventh embodiment is the same as that of the first embodiment.

As with the second embodiment, the end effector 20 is mounted on the rotary axis of the rotation mechanism 16 provided on the first movable member 5', and further, an end effector 33 is fixedly mounted on the second movable member 5" as well, opposite the end effector 20 on the first movable member 5', such that assembly work and the like is carried out by changing the relative positions of the two plates.

In the embodiments described above, the rotation mechanism 16 provided on the movable member 5 has a single rotary axis 17, and there is only one end effector posture control actuator 7 and only one rotational-force transmission means 15 that drive the rotary axis 17. However, in a case in which more than one rotary axis 17 is provided on the rotation mechanism 16, end effector posture control actuators to drive the rotary axis and rotational-force transmission means to transmit the rotational force of the actuators to the respective rotary axes may be provided in numbers equal to the number of rotary axes thus provided.

## Claims

1. A parallel-link operational device comprising:
a base;
a movable member on which an end effector is attached;
a plurality of rotary actuators fixedly mounted at respective predetermined positions on said base such that axes of output shafts of the rotary actuators extend substantially radially from a center of said base; and
a link mechanism for operatively connecting the respective output shafts of said rotary actuators to said movable member so that a position and/or a posture of said movable member is controlled by said rotary actuators.

2. A parallel-link operational device according to claim 1, further comprising an additional actuator mounted on said base for controlling a posture of the end effector, a rotary shaft provided at said movable member and connected with the end effector, and a rotational-force transmission mechanism for transmitting a rotational force of said additional actuator to said rotary shaft,
wherein six of the rotary actuators are provided so that the position and the posture of said movable member are controlled, and the posture of the end effector with respect to said movable member is controlled by said additional actuator.

3. A parallel-link operational device according to claim 1, further comprising an additional actuator mounted on said base for controlling a posture of the end effector, a rotary shaft provided at said movable member and connected with the end effector, and a rotational force transmission mechanism for transmitting a rotational force of said additional actuator to said rotary shaft,
wherein three of the rotary actuators are provided and said link mechanism comprises parallel linkages so that the position of said movable member is controlled by the three rotary actuators, and the posture of the end effector with respect to said movable member is controlled by said additional actuator.

4. A parallel-link operational device according to claim 1, wherein said plurality of rotary actuators comprise a first three actuators that actuate a first movable member on which a first end effector is mounted, and a second three actuators that actuate a second movable member on which a second end effector is arranged to be opposite the first end effector, said link mechanism comprises parallel linkages for operatively connecting said first movable member and said first three rotary actuators, and linkages for operatively connecting said second movable member and said second three rotary actuators for controlling the posture of said second movable member,
the parallel-link operational device further comprising a support post provided on a pedestal and rotatably supporting said second movable member by a spherical joint, a rotary shaft provided at said first movable member and connected with the first end effector, an additional actuator mounted on said base for controlling a posture of the first end effector, and a rotational-force transmission mechanism for transmitting a rotational force of said additional actuator to said rotary shaft.

5. A parallel-link operational device according to claim 1, wherein said rotary actuators are arranged so that the axes of the output shafts radially extend at equal intervals about the center of said base.

6. A parallel-link operational device according to claim 1, wherein said rotary actuators are arranged so that distal ends of the output shaft are directed toward the center of said base.

7. A parallel-link operational device according to claim 1, wherein said rotary actuators are arranged so that distal ends of the output shafts are directed away from the center of said base, and have covers for preventing links of said link mechanism fixed to the output shafts from being exposed outside.

8. A parallel-link operational device according to claim 1, wherein said rotary actuators are arranged so that the axes of the output shafts are inclined with respect to said base.

9. A parallel-link operational device according to claim 1, wherein said rotary actuators are mounted on mounting members arranged vertically downward from said base.

10. A parallel-link operational device according claim 1, wherein said rotary actuators are mounted on mounting members arranged vertically upward from said base.

11. A parallel-link operational device according to claim 10, wherein covers are provided to connect said mounting members with one another.

12. A parallel-link operational device according to claim 1, wherein said rotary actuators have speed reducers.
